## Europäisches Patentamt

## European Patent Office

## Office européen des brevets

(11) Veröffentlichungsnummer: **0 103 563**
A2

(12) # EUROPÄISCHE PATENTANMELDUNG

(21) Anmeldenummer: 83890152.8

(22) Anmeldetag: 08.09.83

(51) Int. Cl.³: **F 16 K 31/60**

(30) Priorität: 09.09.82 AT 3376/82

(43) Veröffentlichungstag der Anmeldung: 21.03.84
Patentblatt 84/12

(84) Benannte Vertragsstaaten: DE FR GB IT

(71) Anmelder: HOERBIGER VENTILWERKE AKTIENGESELLSCHAFT, Braunhubergasse 23, A-1110 Wien (AT)

(72) Erfinder: Frisch, Herbert, Ing., Reibergasse 9-23, A-1238 Wien (AT)

(74) Vertreter: Klein, Adam, Dipl.Ing., Patentanwalt Dipl.Ing. Adam Klein Fasangasse 49, A-1030 Wien (AT)

(54) Vorrichtung zum Betätigen von Steuerventilen u.dgl.

(57) Vorrichtung zum Betätigen von Steuerventilen, wobei in einem Gehäuse ein Schalthebel schwenkbar gelagert ist, der mit dem Stellglied des Steuerventils in Antriebsverbindung steht. Der Schalthebel ist in Richtung seiner Längsachse gegen die Kraft einer Rückstellfeder geführt, die ihn mit seinem unteren Ende federnd gegen den Gehäuseboden drückt. Auf dem Gehäuseboden ist eine Kulissenbahn für das untere Ende des Schalthebels vorgesehen, die als Gleitbahn ausgebildet oder mit verschiedenen Rasten versehen sein kann, in die der Schalthebel einrastet. Die Kulissenbahn kann auf einem Einsatzstück vorgesehen sein, das in den Gehäuseboden austauschbar eingesetzt ist.

EP 0 103 563 A2

0103563

Patentanwalt
Dipl. Ing. Adam Klein
1030 Wien, Fasangasse 49
Telefon 78 39 20

Patentinhaber:    HOERBIGER VENTILWERKE AKTIENGESELLSCHAFT
                  Wien

Gegenstand:       Vorrichtung zum Betätigen von Steuerventilen
                  u.dgl.

---

Die Erfindung bezieht sich auf eine Vorrichtung zum Betätigen von Steuerventilen u.dgl., mit einem Schalthebel, der in einem Gehäuse schwenkbar gelagert ist und mit dem Stellglied des Steuerventils in Antriebsverbindung steht.

Für die Betätigung von Steuerventilen, Steuerschiebern u.dgl. werden Hebel- und Stößelanordnungen verwendet, die auf das Stellglied des Ventils wirken. In Abhängigkeit vom Einsatz des betätigten Ventils sind dabei rastende, sperrende und frei bewegliche Ausführungen der Betätigungsvorrichtung erforderlich, wobei auch noch die Anzahl der jeweils vorgesehenen Rasten oder Sperrstellungen verschieden sein kann. Es ist dadurch für jeden Anwendungsfall praktisch eine andere Bauform der Betätigungsvorrichtung erforderlich. Um die gewünschten Rast- und Sperrstellungen zu erhalten, sind bei den bekannten Ausführungen durch Federn belastete Kugeln oder Stifte vorgesehen, die in Bohrungen oder Nuten im Betätigungsgestänge eingreifen, wobei eigene Einrichtungen für das Entriegeln der Sperren vorgesehen sind. Die bekannten Betätigungsvorrichtungen für Steuerventile sind deshalb verhältnismäßig aufwendig und entsprechend teuer. Hinzu kommt noch, daß aufgrund der verschiedenen Ausführungsvarianten eine große Lagerhaltung erforderlich ist.

Der Erfindung liegt die Aufgabe zugrunde, die Betätigungsvorrichtungen für Steuerventile u.dgl. so zu verbessern, daß eine Grundform einfach, rasch und billig für die einzelnen Anwendungsfälle ausgebildet bzw. umgebaut werden kann.

Die erfindungsgemäße Vorrichtung ist dadurch gekennzeichnet, daß der Schalthebel in Richtung seiner Längsachse gegen die Kraft einer Rückstellfeder verschiebbar geführt ist, die ihn mit seinem unteren Ende federnd gegen den Gehäuseboden drückt, auf dem eine Kulissenbahn für das untere Ende des Schalthebels vorgesehen ist. Bei dieser Ausbildung kann für alle Ausführungsvarianten der Betätigungsvorrichtung dasselbe Gehäuse verwendet werden, wobei lediglich die Kulissenbahn der gewünschten Betätigungsart angepaßt ist.

Bei einer bevorzugten Ausführungsform der erfindungsgemäßen Vorrichtung ist die Kulissenbahn auf einem Einsatzstück vorgesehen, das in den Gehäuseboden austauschbar eingesetzt ist. Das Einsatzstück kann aus einer die Kulissenbahn aufweisenden Platte mit einem Zentrierfortsatz bestehen, der in eine Aussparung im Gehäuseboden eingreift. Diese Ausbildung

0103563

hat den Vorteil, daß durch bloßen Austausch des Einsatzstückes die Betätigungsvorrichtung für die gewünschte Betätigungsart eingerichtet bzw. von einer Betätigungsart auf die andere umgerüstet werden kann.

Die Kulissenbahn kann erfindungsgemäß als Gleitbahn für das untere Ende des Schalthebels ausgebildet sein. Die Betätigung hat dann zwei Endstellungen, wobei die Endanschläge von Seitenwänden oder Vorsprüngen des Gehäuses der Betätigungsvorrichtung gebildet sein können. Der Schalthebel kann frei zwischen den beiden Endlagen verschoben werden.

Wenn die Kulissenbahn nach einem weiteren Merkmal der Erfindung Rasten mit abgerundeten Kanten für das untere Ende des Schalthebels aufweist, rastet beim Verschwenken des Schalthebels dessen unteres Ende aufgrund der Rückstellfeder in die einzelnen Rasten ein, so daß Zwischenstellungen des Schalthebels genau definiert sind. Das Umschalten von einer Raststellung in die andere erfolgt durch die auf den Schalthebel wirkende Schwenkkraft.

In weiterer Ausgestaltung der Erfindung ist es auch möglich, in der Kulissenbahn Sperrausnehmungen vorzusehen, in die das untere Ende des Schalthebels sperrend eingreift. Bei dieser Ausbildung ist es nicht möglich, den Schalthebel von einer Sperrstellung in die andere durch bloße Anwendung einer Schwenkkraft zu verstellen. Der Schalthebel muß vielmehr durch axiales Anheben gegen die Kraft der Rückstellfeder mit seinem unteren Ende aus der jeweiligen Sperrausnehmung entriegelt werden und kann erst danach in eine andere Stellung verschwenkt werden. Im Rahmen der Erfindung können auch kombinierte Kulissenbahnen vorgesehen werden, auf denen Gleitbahnen, Rasten und Sperrausnehmungen in beliebigen Kombinationen vorgesehen sind, wodurch eine entsprechende Vielfalt von Varianten der Betätigungsvorrichtung verwirklicht werden kann, u.zw. durch bloßes Austauschen des Einsatzstückes im Gehäuseboden.

Eine vorteilhafte Ausbildungsform der erfindungsgemäßen Betätigungsvorrichtung besteht schließlich darin, daß der Schalthebel ein Kugelsegment axial verschiebbar durchsetzt, das in einen Zylinderraum des Gehäuses drehbar eingesetzt und in diesem durch Einrasten in eine Kugelfläche, durch Umbördelung oder mit Hilfe eines Sprengringes verankert ist, wobei die Rückstellfeder zwischen dem Kugelsegment und einem Stützring auf dem Schalthebel angeordnet ist. Es handelt sich hiebei um eine einfache Bauart der erfindungsgemäßen Vorrichtung.

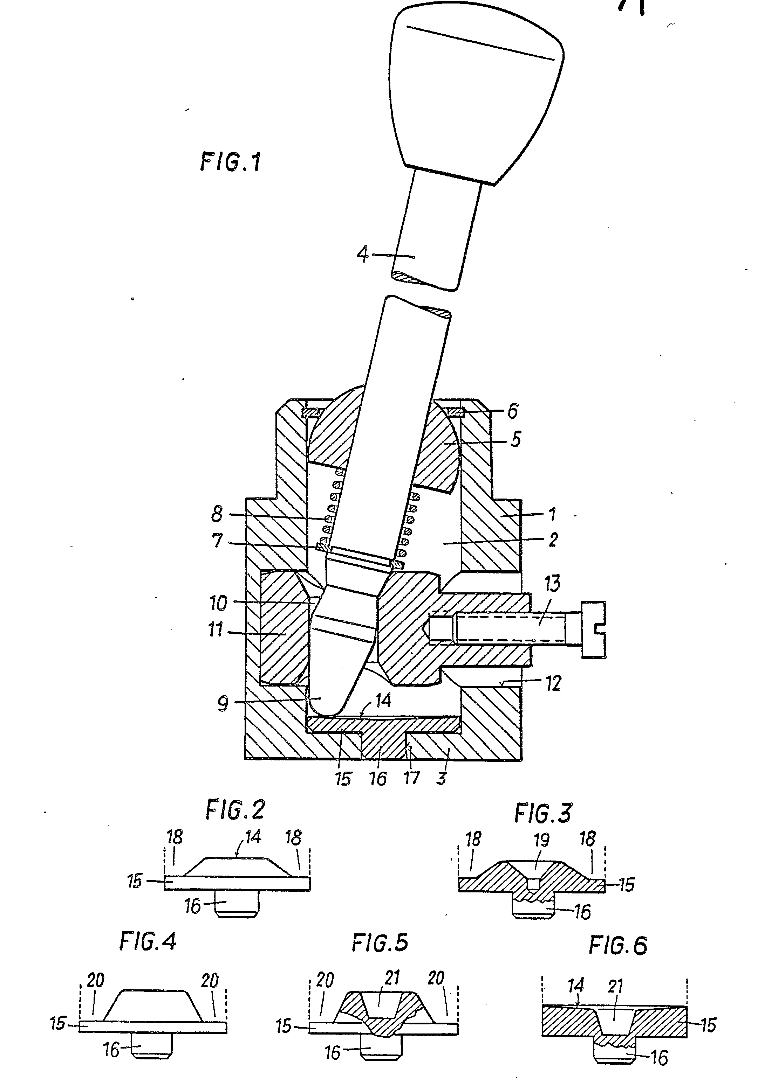

Weitere Einzelheiten und Vorteile der Erfindung sind der nachfolgenden Beschreibung eines Ausführungsbeispiels zu entnehmen, das in der Zeichnung dargestellt ist. In dieser zeigen: Fig. 1 eine Ausführungsform der erfindungsgemäßen Betätigungsvorrichtung im axialen Mittelschnitt und die Fig. 2 bis 6 unterschiedlich ausgebildete Einsatzstücke in Seitenansicht, teilweise im Schnitt, für den Gehäuseboden der Betätigungsvorrichtung.

Die in Fig. 1 dargestellte Betätigungsvorrichtung besteht aus einem Gehäuse 1 mit einem vertikalen Zylinderraum 2, der unten durch einen Gehäuseboden 3 abgeschlossen ist. Im Zylinderraum 2 ist ein als Handhebel ausgebildeter Schalthebel 4 verschwenkbar gelagert, u.zw. mit Hilfe eines Kugelsegmentes 5, das in den Zylinderraum 2 eingesetzt und in diesem durch einen Sprengring 6 verankert ist. Der Schalthebel 4 durchsetzt mit seinem Schaft das Kugelsegment 5 und ist in diesem in Achsrichtung verschiebbar. Zwischen einem in eine Nut des Schalthebels 4 eingesetzten Stützring 7 und der Unterseite des Kugelsegmentes 5 ist eine Rückstellfeder 8 vorgesehen, die den Schalthebel 4 mit seinem unteren, konisch zulaufenden Ende 9 auf den Gehäuseboden 3 drückt. Das Ende 9 des Schalthebels 4 durchsetzt einen Durchgang 10 im Kopfteil eines Verbindungsgestänges 11, das in einer Querbohrung 12 des Gehäuses 1 senkrecht zur Achse des Zylinderraumes 2 verschiebbar gelagert ist und mit Hilfe einer Schraube 13 mit dem Stellglied eines nicht dargestellten Steuerventils oder Steuerschiebers antriebsverbunden werden kann.

Im Boden 3 des Gehäuses 1 ist eine Kulissenbahn 14 vorgesehen, über die beim Verschwenken des Schalthebels 4 das untere Ende 9 desselben geführt ist. Im dargestellten Ausführungsbeispiel ist die Kulissenbahn 14 von einem Einsatzstück 15 gebildet, das einen Zentrierfortsatz 16 aufweist, mit welchem es in eine Aussparung 17 im Gehäuseboden 3 eingesetzt ist. Die Kulissenbahn 14 kann unterschiedlich ausgebildet sein, in Abhängigkeit vom Verwendungszweck, für den die Betätigungsvorrichtung vorgesehen ist. Im Ausführungsbeispiel nach Fig. 1 ist die Kulissenbahn 14 des Einsatzstückes 15 als Gleitbahn ausgebildet, die aus einer seichten Vertiefung in der Oberfläche des Einsatzstückes 15 besteht. Der Schalthebel 4 kann hiebei frei von einer Endlage in die andere verschoben werden, wobei sein unteres Ende 9 in den beiden Endlagen jeweils an der Seitenwand des Zylinderraumes 2 anliegt, die hiebei die Endanschläge bildet.

In den Fig. 2 bis 6 sind Varianten des Einsatzstückes 15 dargestellt, die an Stelle des in Fig. 1 verwendeten Einsatzstückes 15 in den Gehäuseboden 3 eingesetzt werden können. Beim Einsatzstück 15 nach Fig. 2 ist die Kulissenbahn 14 von einem flachen Kegelstumpf gebildet, der abgerundete Kanten besitzt. Wenn dieses Einsatzstück 15 in den Gehäuseboden 3 eingesetzt wird, bilden die flachen, abgerundeten Seitenwände des Kegelstumpfes zusammen mit den Seitenwänden des Zylinderraumes 2 Rasten 18 für das untere Ende 9 des Schalthebels 4. Der Schalthebel 4 kann hiebei zwischen seinen beiden Endlagen frei verschoben werden, rastet jedoch in diesen in die Rasten 18 ein, aus denen er durch Anwendung einer etwas größeren Verschiebekraft ausgerastet werden kann. Das Einsatzstück nach Fig. 3 unterscheidet sich von der Ausbildung nach Fig. 2 lediglich dadurch, daß zusätzlich eine Mittelraste 19 vorgesehen ist. Dadurch rastet der Schalthebel 4 auch in der Mittelstellun ein.

Die Fig. 4 und 5 zeigen eine Ausführung, bei der die Kulissenbahn 14 aus einem steileren und höheren Kegelstumpf besteht. Bei Verwendung eines solchen Einsatzstückes im Gehäuseboden 3 entstehen zwischen den Seitenwänden des Kegelstumpfes und den Wänden des Zylinderraumes 2 Sperrausnehmungen 20, in die das Ende 9 des Schalthebels 4 eingreift. Aus diesen Sperrausnehmungen 20 kann der Schalthebel 4 nur dadurch ausgerastet werden, daß er in Achsrichtung gegen die Kraft der Rückstellfeder 8 angehoben und anschließend verschwenkt wird. Gemäß Fig. 5 ist in dem dort dargestellten Einsatzstück 15 eine zusätzliche Sperrausnehmung 21 in der Mitte der Kulissenbahn 14 vorgesehen. Bei Verwendung eines solchen Einsatzstückes besitzt der Schalthebel 4 drei Stellungen, in denen er verriegelt ist.

Das Sperrstück 15 nach Fig. 6 besitzt eine Kulissen - bahn 14, in deren Zentrum eine Sperrausnehmung 21 vorgesehen ist und die um die Sperrausnehmung 21 herum als Gleitbahn ausgebildet ist. Der Schalthebel 4 besitzt bei Verwendung eines solchen Einsatzstückes 15 lediglich eine zentrale verriegelte Stellung, wobei er nach seinem Anheben gegen die Kraft der Feder 8 in die anderen Stellungen frei verschiebbar ist und aus diesen heraus auch wieder in die mittlere, gesperrte Stellung verschoben werden kann.

Abweichend vom dargestellten Ausführungsbeispiel könnte die Kulissenbahn 14 mit oder ohne Rasten oder Sperrausnehmungen auch unmittelbar im Boden 3 des Gehäuses 1 vorgesehen sein. Der Gehäuseboden 3 müßte dann dem jeweiligen Verwendungszweck der Betätigungsvorrichtung entsprechend bearbeitet werden. Weiterhin ist es bei der erfindungsgemäßen Ausbildung

- 8 -

möglich , Kulissenbahnen vorzusehen, auf denen Gleitbahnen, Rasten und Sperrausnehmungen in beliebiger Anordnung miteinander kombiniert sind. Die Betätigungsvorrichtung kann dadurch praktisch allen Anforderungen angepaßt werden.

Patentansprüche:

Patentansprüche:

1. Vorrichtung zum Betätigen von Steuerventilen u.dgl., mit einem Schalthebel, der in einem Gehäuse schwenkbar gelagert ist und mit dem Stellglied des Steuerventils in Antriebsverbindung steht, dadurch gekennzeichnet, daß der Schalthebel (4) in Richtung seiner Längsachse gegen die Kraft einer Rückstellfeder (8) verschiebbar geführt ist, die ihn mit seinem unteren Ende (9) federnd gegen den Gehäuseboden (3) drückt, auf dem eine Kulissenbahn (14) für das untere Ende (9) des Schalthebels (4) vorgesehen ist.

2. Vorrichtung nach Anspruch 1, dadurch gekennzeichnet, daß die Kulissenbahn (14) auf einem Einsatzstück (15) vorgesehen ist, das in den Gehäuseboden (3) austauschbar eingesetzt ist.

3. Vorrichtung nach Anspruch 2, dadurch gekennzeichnet, daß das Einsatzstück (15) aus einer die Kulissenbahn (14) aufweisenden Platte mit einem Zentrierfortsatz (16) besteht, der in eine Aussparung (17) im Gehäuseboden (3) eingreift.

4. Vorrichtung nach Anspruch 1, 2 oder 3, dadurch gekennzeichnet, daß die Kulissenbahn (14) als Gleitbahn für das untere Ende (9) des Schalthebels (4) ausgebildet ist (Fig. 1).

5. Vorrichtung nach einem der Ansprüche 1 bis 4, dadurch gekennzeichnet, daß die Kulissenbahn (14) Rasten (18,19) mit

0103563

- 10 -

abgerundeten Kanten für das untere Ende (9) des Schalthebels (4) aufweist (Fig.2 u.3).

6. Vorrichtung nach einem der Ansprüche 1 bis 5, dadurch gekennzeichnet, daß in der Kulissenbahn (14) Sperrausnehmungen
(20,21) vorgesehen sind, in die das untere Ende (9) des
Schalthebels (4) sperrend eingreift (Fig.4 u.5).

7. Vorrichtung nach einem der Ansprüche 1 bis 6, dadurch
gekennzeichnet, daß der Schalthebel (4) ein Kugelsegment
(5) axial verschiebbar durchsetzt, das in einen Zylinderraum (2) des Gehäuses (1) drehbar eingesetzt und in diesem
durch Einrasten in eine Kugelfläche, durch Umbördelung oder
mit Hilfe eines Sprengringes (6) verankert ist, wobei die
Rückstellfeder (8) zwischen dem Kugelsegment (5) und einem
Stützring (7) auf dem Schalthebel (4) angeordnet ist.

0103563

1/1

FIG.1

FIG.2

FIG.3

FIG.4

FIG.5

FIG.6